# FASCICULE DE BREVET EUROPEEN

(11) **EP 0 524 852 B1**
(45) Date de publication et mention de la délivrance du brevet: **10.04.1996**
(21) Numéro de dépôt: 92401952.4
(22) Date de dépôt: 07.07.1992
(51) Int. Cl.: G01F 1/32

(54) **Oscillateur fluidique et debitmetre comportant un tel oscillateur**
Fluidischer Oszillator und Verwendung in einem Durchflussmesser
Fluidic oscillator and flowmeter incorporating the same

(30) Priorité: 09.07.1991 FR 9108596
(43) Date de publication de la demande: 27.01.1993
(73) Titulaire: SCHLUMBERGER INDUSTRIES, F-92120 Montrouge (FR)
(72) Inventeur: Huang, Bao Tuan, F-92160 Antony (FR)

(56) Documents cités:
- WO-A-79/00361
- US-A- 4 843 889

## Description

La présente invention concerne un oscillateur fluidique permettant la mesure des débits d'un fluide, liquide ou gazeux, en écoulement.

Les oscillateurs fluidiques présentent un intérêt considérable pour le comptage volumique de fluide, tels que l'eau et le gaz, délivrés aux usagers. La plupart des débitmètres ou compteurs existant actuellement comportent des éléments mécaniques en mouvement. C'est le cas notamment des débitmètres à turbine ou à membrane. Par comparaison, les oscillateurs fluidiques n'ont aucune pièce en mouvement qui pourrait s'user avec le temps et en conséquence ces oscillateurs ne nécessitent pas d'être recalibrés.

Ces oscillateurs peuvent être de petite dimension et d'architecture très simple. Leur fiabilité est donc très bonne. De plus, ils délivrent un signal en fréquence, lequel peut être aisément converti en signal numérique. Cette caractéristique est particulièrement avantageuse pour la lecture des compteurs à distance.

La plupart des efforts pour développer ces débitmètres se sont portés sur les débitmètres à effet Vortex et les débitmètres à effet Coanda.

Le principe de fonctionnement des débitmètres à effet Vortex est basé sur le fait bien connu que la présence d'un obstacle dans une conduite dans laquelle s'écoule un fluide donne lieu à un échappement périodique de tourbillons. Le principe de la mesure consiste à détecter la fréquence de détachement des tourbillons qui, pour un obstacle de géométrie donnée, est proportionnelle à la vitesse d'écoulement.

La fréquence des tourbillons est mesurée de différentes façons, ce qui permet d'accéder à la vitesse moyenne de l'écoulement, donc au débit. Les débitmètres à effet Vortex sont généralement très sensibles au bruit et aux conditions du fluide en amont. En pratique, on utilise un redresseur d'écoulement pour rendre uniforme le profil de vitesse. Un débitmètre de ce type est par exemple décrit dans le brevet US N° 3,589,185.

L'effet Coanda, utilisé dans les débitmètres du même nom, consiste en la tendance naturelle d'un jet fluide de suivre les contours d'une paroi quand le jet se décharge près de cette paroi, même si le contour de cette paroi s'éloigne de l'axe de décharge du jet. Un oscillateur fluidique de ce type comporte une chambre dans laquelle se décharge le jet de fluide à travers une tuyère convergente. Deux parois latérales sont placées dans la chambre symétriquement par rapport à l'axe de décharge du jet. Le jet issu de l'entrée de l'oscillateur s'attache spontanément à l'une des parois latérales par effet Coanda. Une partie du débit est alors dérivée par un canal latéral de la paroi sur laquelle s'attache le jet, ce qui a pour effet de décoller le jet de cette dernière et de l'attacher à la paroi opposée. Le phénomène se reproduit alors et entraine une oscillation permanente de l'écoulement entrant. Malheureusement, avec ce type d'appareil, la plage de mesure de débit est relativement limitée et la non linéarité de la courbe de calibration est assez importante. De plus, ce type d'appareil peut s'arrêter d'osciller dans certaines conditions liées à des perturbations extérieures, et il en résulte une perte du signal. De façon à augmenter la plage de mesure possible, Okadayashi et al ont proposé, dans le brevet U.S. N° 4,610,162, de combiner deux oscillateurs fluidiques, l'un fonctionne en bas débits et l'autre en gros débits.

A cause des inconvénients rencontrés avec les débitmètres à effet Vortex et à effect Coanda, des tentatives ont été faites pour développer d'autres types d'oscillateurs fluidiques qui opèrent selon des principes fondamentalement differents. On en trouve une application dans les débitmètres décrits dans les brevets U.S. N° 4,184,636, N° 4,244,230 et N° 4,843,889.

Par exemple, le brevet U.S. N° 4,244,230 décrit un débitmètre à oscillateur fluidique placé dans une canalisation sur le parcours du fluide dont il prélève une partie. L'oscillateur a deux organes disposés côte à côte et dont les parois en vis à vis forment une buse. Un obstacle possède une chambre d'oscillation frontale placée en regard de la buse. La chambre présente une entrée et une sortie communes. Le jet sortant de la buse pénètre dans la chambre et vient frapper le fond de la chambre.

Le jet est mis en oscillation transversale dans la chambre par la formation de deux tourbillons, de part et d'autre du jet. Chaque tourbillon est alternativement fort et faible, en opposition de phase. Le jet ressort par la sortie commune et est dirigé dans le flux principal.

Des capteurs de pression permettent de mesurer la fréquence des oscillations du jet dans la chambre qui est proportionnelle au débit.

Les performances de ce type de débitmètre sont généralement meilleures que celles obtenues avec les débitmètres fluidiques classiques. Malheureusement, ces performances ne sont pas encore satisfaisantes en particulier au niveau de la sensibilité et de la plage de mesure.

La présente invention comme revendiqué dans la revendication 1 a pour but de remédier à ces inconvénients. L'invention propose un oscillateur fluidique et un débitmètre comportant un tel oscillateur qui a des performances améliorées par rapport aux débitmètres de l'art antérieur.

De façon plus précise, l'invention concerne un oscillateur fluidique permettant d'entretenir l'oscillation du jet même à bas débit. Cet oscillateur comprend :
- une entrée du fluide apte à former un jet bidimensionnel,
- un obstacle possédant une partie frontale en forme de chambre en regard de l'entrée, sur le parcours du jet, cette chambre comportant deux parois symétriques par rapport à un plan de symétrie longitudinal passant par ladite entrée, les parois se rejoignant sur ce plan,
- des moyens pour augmenter alternativement la pression sur chacun des flancs latéraux de l'obstacle au voisinage de la partie frontale en relation avec une oscillation du jet entre les parois de la chambre.

De manière avantageuse, les parois de la chambre sont inclinées pour former sensiblement un V dont les deux branches vont en s'évasant.

Selon une réalisation particulière, l'oscillateur comprend un enceinte débouchant d'une part sur l'entrée du fluide et d'autre part sur une sortie du fluide, l'obstacle étant disposé dans cette enceinte, cette enceinte ayant des parois formant des passages d'écoulement du fluide avec les parois extérieures de l'obstacle.

Avantageusement, les moyens pour augmenter la pression sur les flancs latéraux comprennent deux passages principaux symétriques percés dans les parois de la chambre, chaque passage étant incliné par rapport au plan longitudinal et ayant une entrée à l'intérieur de la chambre et une sortie sur un flanc latéral de l'obstacle.

Selon une caractéristique avantageuse de l'invention, lesdits passages sont des fentes.

Lesdits passages peuvent avoir une section circulaire ou rectangulaire ou carrée.

Dans un mode de réalisation particulier les passages ont une section allant en diminuant puis en augmentant.

Avantageusement lesdits passages percent ladite chambre à l'endroit ou à proximité du point d'arrêt du jet.

Selon une variante de réalisation, l'oscillateur comprend au moins deux passages de fluide supplémentaires percés dans ledit obstacle, lesdits passages supplémentaires étant en aval par rapport aux premiers passages et symétriques par rapport au plan de symétrie longitudinal.

Selon un mode de réalisation particulier, au moins lesdits passages principaux sont coudés.

L'invention concerne aussi un débitmètre comprenant un tel oscillateur fluidique, le fluide oscillant entre les parois de la chambre à une fréquence d'oscillation caractéristique du débit du fluide, et comprenant aussi des moyens de mesure de la fréquence d'oscillation.

Lesdits moyens de mesure de la fréquence d'oscillation comprennent des moyens de mesure des variations de la vitesse d'écoulement du fluide dans les passages percés dans les parois de la chambre.

Les caractéristiques de l'invention ressortiront mieux à la lecture de la description qui suit, donnée à titre illustratif et non limitatif, et se référant aux dessins annexés sur lesquels :
- Les Figures 1A et 1B représentent un mode de réalisation d'un débitmètre comportant un oscillateur fluidique conforme à la présente invention, la figure 1A montrant cet oscillateur en coupe longitudinale et la figure 1B étant une coupe transverse selon la ligne AA de la figure 1A;
- La figure 2A représente schématiquement une vue partielle d'un obstacle muni d'un passage formant un Venturi conformément à une réalisation particulière de l'invention;
- La figure 2B représente schématiquement une variante de réalisation d'un oscillateur fluidique conforme à l'invention;
- La figure 3 illustre le principe de fonctionnement de l'oscillateur fluidique;
- La figure 4 montre la variation de fréquence d'oscillation du jet en fonction du nombre de Reynolds, avec et sans les fentes; le nombre de Reynolds est basé sur la vitesse de jet et la largeur de jet;
- La figure 5 représente le rapport signal sur bruit en fonction du nombre de Reynolds avec et sans fentes;
- La figure 6 montre la perte de charge en fonction du nombre de Reynolds, avec et sans fentes; et
- La figure 7 illustre en coupe longitudinale un deuxième mode de réalisation de l'invention.

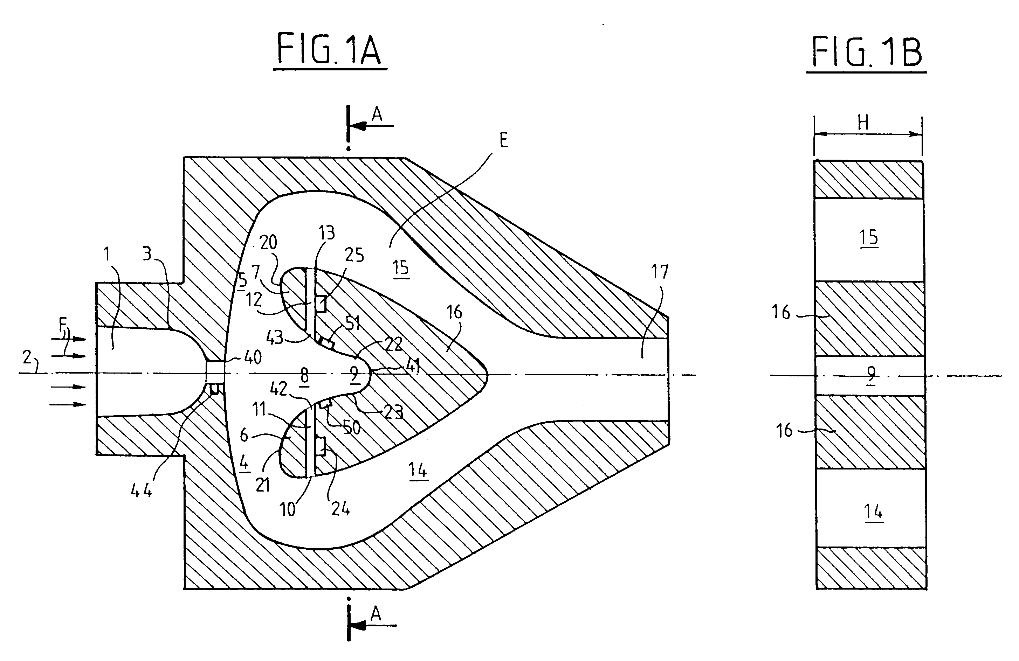

Les figures 1A et 1B représentent schématiquement un débitmètre comprenant un oscillateur fluidique conforme à l'invention et une vue en coupe de ce dernier. Le fluide qui peut être liquide ou gazeux et dont on veut mesurer le débit est representé par les flèches F.

Comme on peut le voir sur les figures 1A et 1B l'oscillateur possède un plan de symétrie longitudinal 2.

Le fluide pénètre dans l'oscillateur par l'intermédiaire d'une chambre cubique 1 de côté égal à la hauteur du jet suivie d'une entrée en forme de tuyère convergente 3 de section rectangulaire. Cette chambre 1 effectue la transition entre l'écoulement axisymétrique et celui bidimensionnel prévu dans l'oscillateur. L'utilisation d'une tuyère convergente 3 permet d'augmenter la vitesse d'écoulement du fluide.

D'autres moyens qu'une tuyère convergente pourraient être utilisés pour obtenir un tel jet de fluide, tel que par exemple une canalisation de petit diamètre et de longueur suffisante.

L'entrée du fluide débouche dans une enceinte E.
Un obstacle 16 de forme symétrique par rapport au plan de symétrie longitudinal 2 est placé à l'intérieur de l'enceinte E. Une chambre convergente 8 est aménagée dans la partie frontale de l'obstacle 16, en regard de la sortie de la tuyère 3. De cette manière, le jet de fluide délivré par la tuyère, en pénétrant dans la chambre convergente 8, donne lieu à deux tourbillons symétriques par rapport au plan de symétrie 2.

La partie frontale de l'obstacle 16 située en regard de la tuyère 3 a la forme d'un V dont les branches vont en s'évasant vers l'extérieur (parois 20 et 21 sur la figure 1A). L'intérieur du V est formé par deux parois 22 et 23 inclinées et symétriques par rapport au plan 2. Ces deux parois 22 et 23 se rejoignent sur le plan 2 pour former un espace mort 9. Les parois 20 à 23 ont une forme convexe, sauf pour la partie des parois 22 et 23 proche du plan de symétrie 2, ces parties de parois 22 et 23 ayant une forme concave. Les parois de l'obstacle 16 sont percées chacune d'un passage de fluide 11 et 12. Ces passages sont placés symétriquement par rapport au plan 2.

Ces passages sont avantageusement des fentes de façon à former deux ilots 6 et 7 dans l'obstacle 16. Les passages 11 et 12 peuvent être des canaux et peuvent avoir une section circulaire ou rectangulaire ou carrée. Sur la figure 1A la section des passages 11 et 12 est uniforme.

La section peut cependant aller en diminuant de façon à obtenir une accelération du fluide s'écoulant dans ces passages (effet Venturi) puis en augmentant de façon à 'éviter la perte de charge supplémentaire. La figure 2A représente schématiquement une vue partielle de l'obstacle 16 muni d'un passage 11 de forme Venturi.

Le fluide peut également s'écouler dans l'oscillateur par les passages 5, 15, 4 et 14 compris entre les parois de l'obstacle 16 et les parois de l'enceinte E.

La figure 1B représente une coupe transversale de l'oscillateur fluidique selon les flèches AA. On remarque que l'oscillateur fluidique a une forme rectangulaire en section transverse perpendiculaire au plan de symétrie 2. Dans cette réalisation particulière, la hauteur H de l'oscillateur est environ 7 fois la largeur de la tuyère d'entrée de l'oscillateur.

A l'intérieur des fentes 11 et 12, des capteurs 24 et 25 permettent de mesurer la vitesse de l'écoulement du fluide dans les fentes.

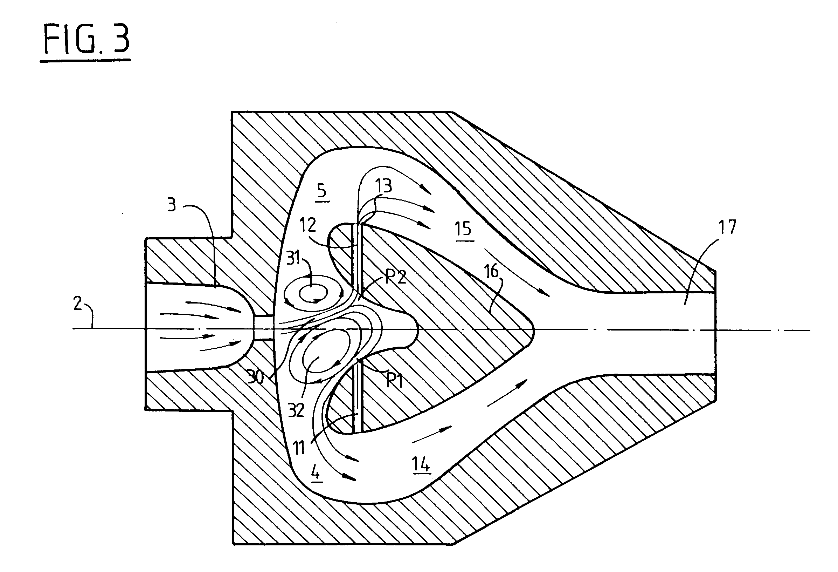

La figure 3 illustre le mode de fonctionnement de l'oscillateur fluidique selon la présente invention. Le fluide dont on veut mesurer le débit pénètre dans l'oscillateur par la tuyère convergente 3. Cette tuyère est connectée par l'intermédiaire d'une chambre cubique de côté égal à la hauteur de l'oscillateur à une canalisation non représentée de section circulaire, montée en amont et par laquelle s'écoule le fluide. En passant au travers de la tuyère 3 le fluide se concentre pour former un jet 30. A partir d'une valeur seuil de la vitesse d'écoulement du fluide dans le jet 30, ce jet oscille à une certaine fréquence d'oscillation entre les deux positions représentées par P1 et P2 sur la figure 3.

L'instabilité naturelle du jet provenant de cette oscillation est due à l'asymétrie du jet, laquelle est habituellement inévitable due à l'instabilité naturelle de jet. On peut accentuer cette asymétrie en plaçant un léger obstacle sur la paroi de la tuyère 3. Cependant ceci n'est généralement pas nécessaire.

La fréquence d'oscillation du jet entre les deux positions P1 et P2 est directement proportionnelle au débit du fluide passant à travers l'oscillateur. Le coefficient de proportionnalité est déterminé simplement par étalonnage de l'oscillateur.

Lorsque le jet est en position P2 comme représenté sur la figure 3, il se forme deux tourbillons, l'un 31 qui est concentré et fort et l'autre 32 qui est faible. Les fentes 11 et 12 sont positionnées de façon à correspondre au point d'arrêt du jet, c'est à dire au point d'impact du jet sur l'obstacle 16 pour une déviation maximale du jet par rapport au plan de symétrie 2.

Pour la position P2, une partie du fluide va s'écouler à travers la fente 12 et émerger de la sortie 13 de la fente pour se diriger vers le passage 15, en augmentant la pression au niveau du passage 5 et la sortie 17 de l'oscillateur. Quant au tourbillon 32, il donnera naissance à un échappement du fluide vers la sortie 17 par les passages 4 et 14 mais également à travers la fente 11. Cependant, la quantité de fluide s'écoulant à travers la fente 11 est faible par rapport à celle s'écoulant vers la fente 12 lorsque le jet est dans la position P2.

Le jet va osciller entre les deux positions P1 et P2 et ceci pour deux raisons.

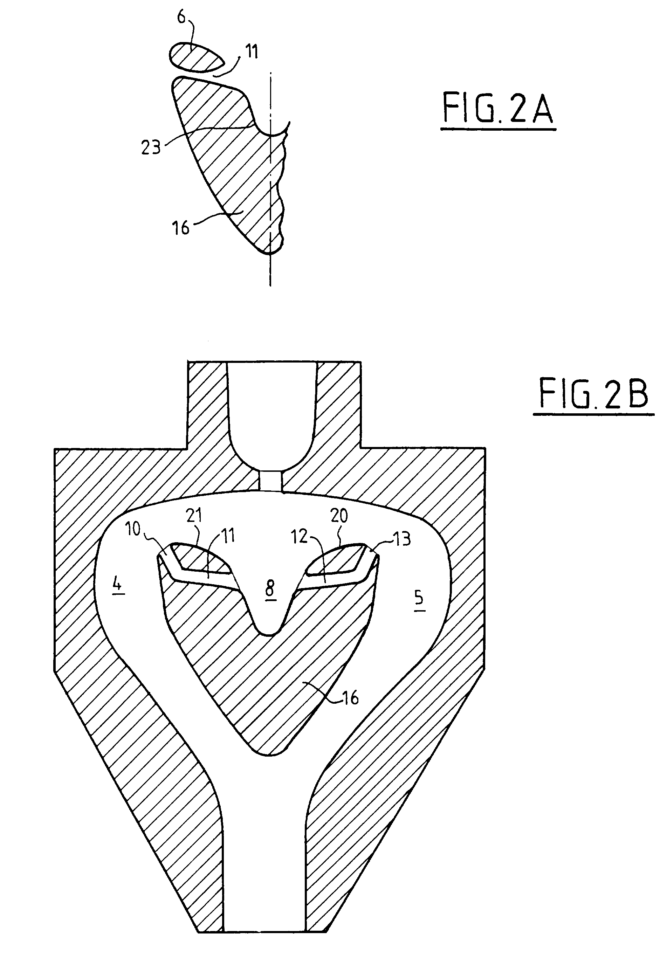

D'une part, il est bien connu que la trajectoire d'un jet libre est instable car un jet n'est jamais homogène si on regarde en section tranverse, mais dissymétrique. Lorsque le jet rencontre un obstacle, comme l'obstacle 16, il oscille entre 2 positions extrêmes, la fréquence d'oscillation étant directement proportionnelle au débit. Cette oscillation s'explique par la création de deux tourbillons principaux, 31 et 32 sur la figure 2.

D'autre part, les fentes 11 et 12 accentuent l'oscillation et augmentent la fréquence d'oscillation. Par exemple dans le cas de la figure 3 lorsque le jet est dans la position P2, des zones de haute pression se créent à l'éntrée de la fente 12 et la présence d'un fort tourbillon 31 bloque pratiquement le passage 5. Dans ce cas, la majorité du fluide s'écoule par les passages 4 et 14, l'écoulement dans la fente 11 étant relativement faible. Le fluide qui s'écoule dans la fente 12 augmentant la pression à la sortie de celle-ci va s'écouler par le passage 15 mais également par le passage 5 pour venir rencontrer le tourbillon 31. Cette augmentation de pression permet de pousser le tourbillon 31 vers le plan de symétrie 2 et contribue ainsi à déplacer le jet de la position P2 à la position P1. Au cours de ce déplacement, le tourbillon 31 s'affaiblit alors que le tourbillon 32 se renforce. Lorsque le jet est en position P1, de manière symétrique à ce qui vient d'être décrit en référence à la figure 3, le tourbillon 32 est le plus intense et la majeure partie du fluide s'écoule à travers la fente 11 alors que la partie du fluide s'écoulant à travers la fente 12 est faible.

En revenant à la figure 1A, la distance entre la sortie 40 de la tuyère 3 et le fond 41 de la zone morte 9 lui faisant face constitue un paramètre géométrique important. Cette distance doit être supérieure à une valeur seuil. Au delà de cette valeur le jet oscille avec une fréquence d'oscillation qui est dépendante de cette distance.

La diminution de la profondeur de la zone morte permet d'augmenter la fréquence d'oscillation. Mais ceci augmente également le débit minimum d'oscillation. Il y a donc un compromis à faire.

Cependant si cette distance est plus faible que la valeur seuil, le jet de fluide n'a pas assez de longueur pour devenir instable et ne peut pas osciller.

La distance entre les entrées 42 de la fente 11 et 43 de la fente 12 est également importante : si cette distance est supérieure à une valeur optimale, la fréquence d'oscillation du jet diminue quand cette distance 42-43 augmente. Inversement si la distance 42-43 est trop petite la chambre convergente 8 devient si petite que les tourbillons n'ont pas assez d'espace pour se déplacer. Les deux tourbillons restent alors bloqués dans une position fixe et aucune oscillation du jet n'apparait. Les dimensions 40-41 et 42-43 dépendent des dimensions du jet lui-même et donc de la sortie de la tuyère 3.

Pour déterminer les dimensions optimales de l'oscillateur on peut procéder par simulation numérique et expérimentation. Par exemple pour déterminer la valeur optimale de la distance 40-41, on déplace l'obstacle 16 le long du plan de symétrie 2 de façon à trouver cette valeur optimale. De même pour la distance 42-43, on peut procéder à des expérimentations avec différentes valeurs. Les distances 40-41 et 42-43 dépendent des dimensions de la sortie de la tuyère 3.

La tuyère convergente d'entrée 3 a pour but d'abaisser le seuil de débit de fluide à mesurer et d'homogéneiser le profil des vitesses.

Quand le jet se déplace de la position P1 à la position P2, la vitesse du fluide dans la fente 12 est grande alors que la vitesse d'écoulement du fluide dans la fente 11 est lente. Quand le jet se déplace de la position P2 à la position P1, une situation inverse s'établit, c'est à dire que la vitesse d'écoulement de fluide dans la fente 11 est grande par rapport à celle dans la fente 12.

En conséquence, deux capteurs de vitesse 24 et 25 situés dans les fentes 11 et 12 peuvent être utilisés pour détecter les variations de vitesse d'écoulement de fluide d'une fente à l'autre. Les variations de vitesse dans les fentes 11 et 12 étant en opposition de phase, les signaux de sortie de capteurs 24 et 25 peuvent être soustrait de façon à obtenir un signal d'amplitude double des amplitudes fournies par les capteurs 24 et 25. De plus, en procédant par soustraction des signaux des capteurs 24 et 25, on améliore leur rapport signal sur bruit.

L'écoulement du fluide dans les fentes 11 et 12 ne subit pas de pertubations, autre que l'influence du jet qui provoque les variations périodiques d'écoulement. Cet écoulement dans les fentes est donc facile à contrôler. La mesure des variations de la vitesse d'écoulement du fluide dans les fentes est une façon avantageuse de mesurer la fréquence d'oscillation du jet et par conséquent du débit.

On peut bien entendu, comme dans les dispositifs de l'art antérieur, mesurer la fréquence d'oscillation du jet en mesurant la différence de pression entre deux points déterminés de la chambre convergente 8. On peut par exemple placer deux capteurs de pression, l'un 51 à proximité de l'entrée 43 de la fente 12 et l'autre 50 à proximité de l'entrée 42 de la fente 11.

La mesure des variations de la vitesse permet d'étendre la plage de mesure des débits. En effet, si on désire maintenir une précision de mesure de la fréquence d'oscillation et donc du débit de 1 à 150, la vitesse évoluera dans les mêmes proportions c'est à dire de 1 à 150 alors que la pression évoluera de 1 à 150 élevé au carré, c'est à dire de 1 à 22500.

Il est très difficile de maintenir le même degré de précision sur une telle plage de mesure de pression en utilisant un seul capteur de pression. De plus, puisque l'amplitude des signaux de pression est en première approximation proportionnelle au carré de la vitesse du jet, pour des faibles vitesses, la variation de pression peut être aussi petite que 0,1 Pascal. Cet ordre de grandeur de pression est presque impossible à détecter avec les capteurs de pression. Il est donc intéressant de mesurer la fréquence d'oscillation du jet à l'aide d'un signal qui dépend de la vitesse, plutôt que la pression, de sorte que la dynamique du signal soit aussi du même ordre de grandeur que celle de la vitesse du fluide. Tout type de capteur de vitesse peut convenir, tel que par exemple les capteurs à film ou fil chaud, les thermistances, capteurs à silicium, les anémomètres laser, ou encore les capteurs magnétiques lorsque le fluide est un liquide électriquement conducteur.

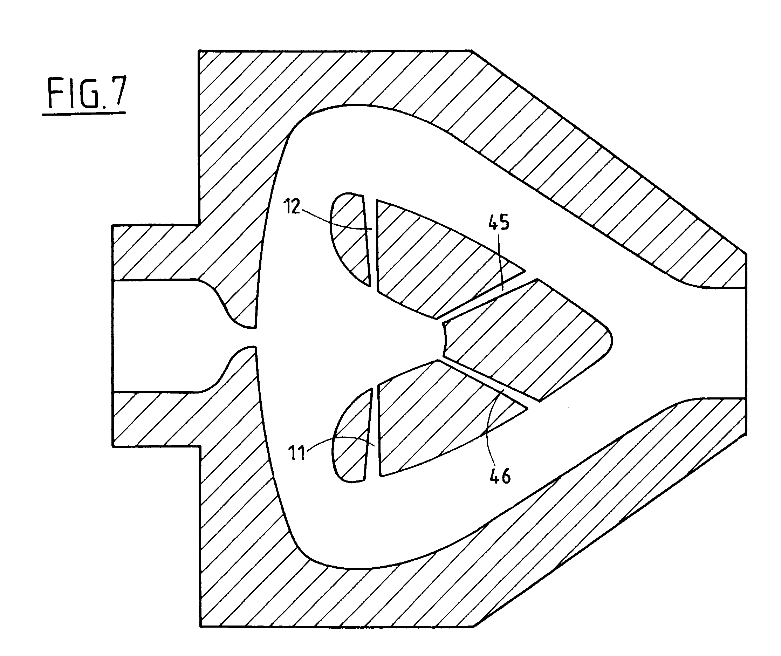

De façon à accélérer la vitesse de rotation des tourbillons et par conséquent le transfert de pression dynamique par augmentation d'une pression au voisinage de la partie frontale de l'obstacle, les fentes 11 et 12 sont orientées préférentiellement dans le sens de la vitesse locale du fluide aux points P1 et P2. Ces points P1 et P2 sont situés symétriquement par rapport au plan de symétrie 2 et à proximité immédiate des points d'arrêt du jet sur l'obstacle 16. Ces positions ne dépendent que faiblement des nombres de Reynolds. En ajoutant des fentes supplémentaires (figure 7) on diminue encore cette dépendance. Les sorties 10 et 13 respectivement des fentes 11 et 12 sont situées près des passages 4 et 5 de façon à augmenter la poussée du fluide sortant de la fente sur le tourbillon de plus grande intensité de façon à le repousser vers le plan de symétrie 2. Sur la figure 1A, les fentes sont orientées à environ 90° par rapport au plan de symétrie 2. Si on diminue cet angle d'inclinaison (la fente 12 sur la figure 1A orientée plus vers la région 15 que la région 5) la perte de charge dans l'oscillateur diminue mais la fréquence d'oscillation du jet diminue également. L'orientation des fentes 11 et 12 résulte donc d'un compromis.

Afin d'améliorer encore la poussée engendrée alternativement sur les tourbillons par les jets sortant des fentes 11 et 12, on peut couder les fentes 11 et 12, comme représenté sur la figure 2B, de manière à rapprocher les sorties 10 et 13 des fentes 11 et 12 de la position des tourbillons. Ainsi, les jets agissent directement sur les tourbillons sans avoir à être guidés par les canaux 4 ou 5.

La limite supérieure de la plage de débit que l'on peut mesurer avec l'oscillateur ne dépend que de la perte de charge que subit le fluide en traversant l'oscillateur. Quant à la limite inférieure de la plage' de mesure, elle est déterminée par le débit n'engendrant que des tourbillons d'intensité insuffisante pour entraîner une oscillation du jet de fluide. On pallie cet inconvénient en plaçant à la sortie 40 de la tuyère convergente 3, un capteur de vitesse 44 dont le rôle est de mesurer les très faibles débits qui ne peuvent pas être mesurés par l'oscillateur. On étend ainsi la plage de mesure possible avec le débitmètre. De plus, le capteur de vitesse 44 peut être régulièrement étalonné par comparaison avec le signal de vitesse ou de débit fourni par l'oscillateur lorsque le capteur 44 et l'oscillateur fonctionnent correctement. En effet le capteur de vitesse 44 dérive habituellement dans le temps alors que l'oscillateur reste stable. Cette solution est décrite dans le brevet US n° 5,003,810.

L'oscillateur de l'invention utilise donc un régime oscillatoire qui est basé sur l'instabilité hydrodynamique résultant de l'interaction entre une paire de tourbillons avec un jet fluide. La mesure des variations de vitesse de fluide dans les fentes 11 et 12 permet d'étendre la gamme de débit possible à mesurer et permet un meilleure calibration. Avec l'oscillateur de l'invention, il n'y a pas de risque de perdre le signal dans la plage de mesure disponible et l'oscillateur délivre une fréquence unique pour un débit donné.

La figure 7 montre un autre exemple de réalisation selon lequel deux fentes supplémentaires 45 et 46 ont été ajoutées. Il en résulte une efficacité plus grande de l'oscillateur par réduction de la perte de charge du fluide traversant l'oscillateur. On peut ainsi par expérience trouver le meilleur compromis entre l'orientation et le nombre de fentes en fonction des caractéristiques du fluide dont on veut mesurer le débit, ainsi que de la plage de débit à mesurer.

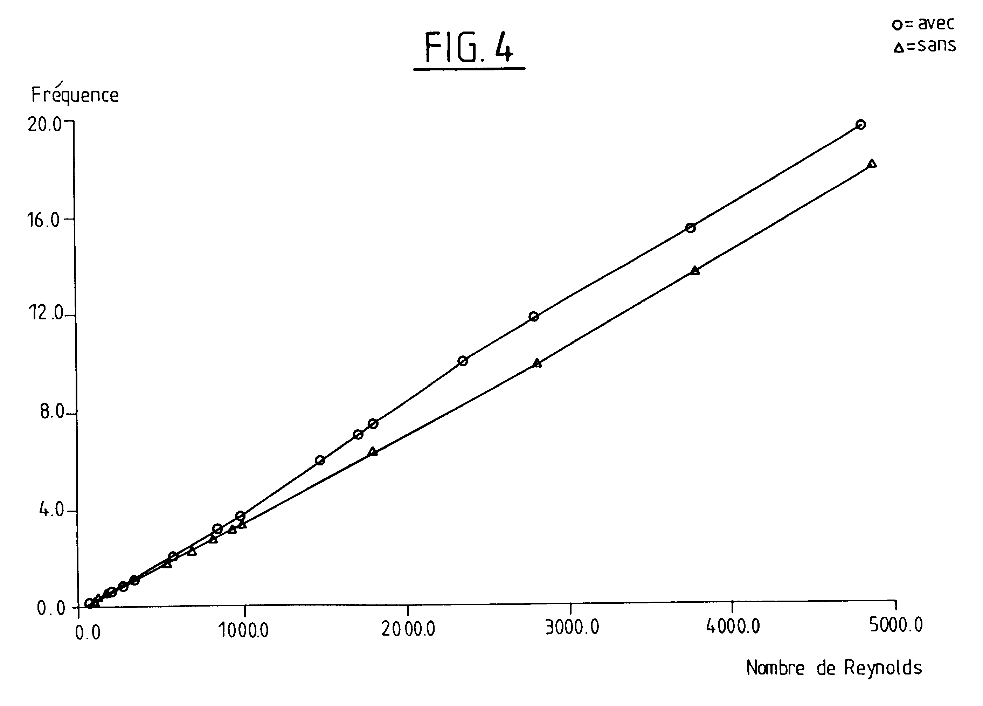

Les figures 4, 5 et 6 montrent les résultats expérimentaux obtenus avec l'oscillateur fluidique de la figure 1A. Afin de comparer l'influence des fentes 11 et 12 sur les performances de l'oscillateur, les expériences ont été réalisées en obstruant les fentes 11 et 12 pour une première série d'expériences et en laissant le passage libre dans les fentes 11 et 12 pour une seconde série d'expériences.

La figure 4 représente la fréquence d'oscillation obtenue exprimée en Hertz en fonction du nombre de Reynolds basé sur la vitesse de jet et sa largeur. La courbe supérieure correspond au résultats expérimentaux avec les fentes et la courbe inférieure sans fentes. On remarque que la fréquence d'oscillation du jet est améliorée avec l'oscillateur de l'invention.

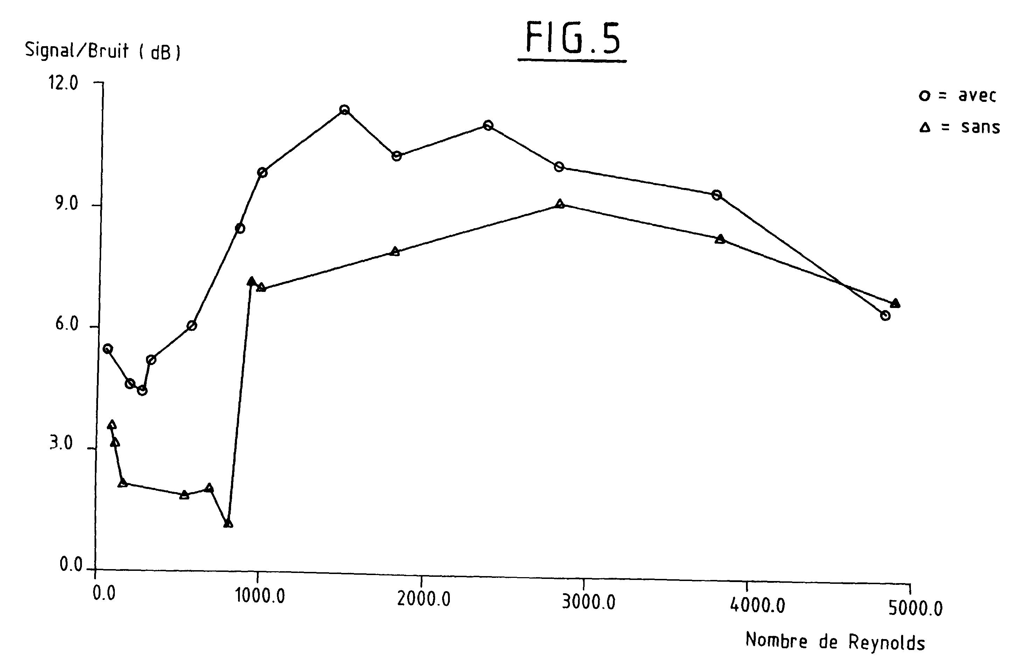

La figure 5 montre l'évolution du rapport signal sur bruit, exprimée en décibels, lorsque le nombre de Reynolds varie. On note une très nette amélioration du rapport signal sur bruit lorsque les fentes 11 et 12 ne sont pas obstruées (courbe supérieure).

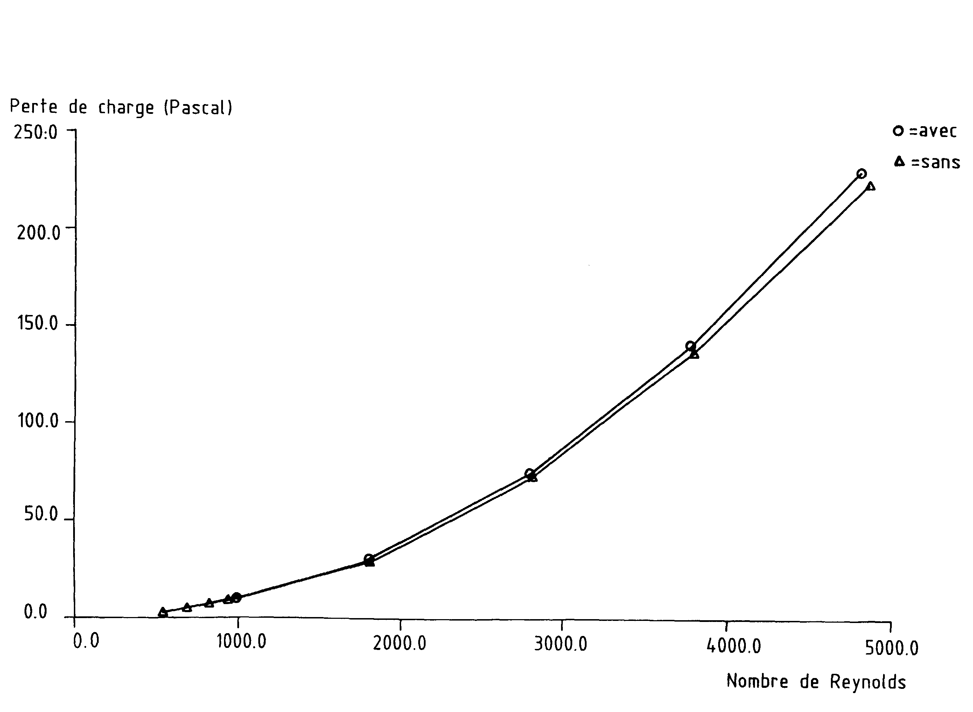

La figure 6 représente l'évolution de la perte de charge exprimée en Pascal en fonction du nombre de Reynolds avec et sans fentes. On remarque que les fentes 11 et 12 n'introduisent pas de perte de charge. Les expériences dont les résultats sont présentées sur les figures 4, 5, 6 précédentes ont été réalisées avec de l'air.

## Revendications

1. Oscillateur fluidique comprenant :
une entrée du fluide (3) apte à former un jet bidimensionnel,
un obstacle (16) possédant une partie frontale en forme de chambre (8) en regard de l'entrée, sur le parcours du jet, cette chambre (8) comportant deux parois (22, 23) symétriques par rapport à un plan de symétrie longitudinal (2) passant par ladite entrée (3), les parois (22, 23) se rejoignant sur ce plan (2) caractérisé en ce qu'il comprend des moyens (11, 12) pour augmenter alternativement la pression sur chacun des flancs latéraux de l'obstacle (16) au voisinage de la partie frontale en relation avec une oscillation du jet entre les parois (22, 23) de la chambre (8), les dits moyens pour augmenter la pression comprenant deux passages principaux (11, 12) symétriques, ayant chacun une entrée (42, 43) à l'intérieur de la chambre (8) et une sortie (10, 13) au voisinage d'un flanc latéral de l'obstacle (16).

2. Oscillateur fluidique selon la revendication 1 caractérisé en ce que les parois (22, 23) de la chambre (8) sont inclinées pour former sensiblement un V dont les deux branches vont en s'évasant.

3. Oscillateur fluidique selon l'une quelconque des revendication 1 et 2 caractérisé en ce qu'il comprend une enceinte (E) débouchant d'une part sur l'entrée du fluide (3) et d'autre part sur une sortie du fluide (17), l'obstacle étant disposé dans cette enceinte (E), cette enceinte ayant des parois formant des passages d'écoulement (4, 5, 14, 15) du fluide avec les parois extérieures de l'obstacle (16).

4. Oscillateur fluidique selon l'une quelconque des revendications 1 à 3, caractérisé en ce que les passages principaux (11,12) sont percés dans les parois (22, 23) de la chambre (8) et sont inclinés par rapport au plan longitudinal (2).

5. Oscillateur fluidique selon la revendication 4 caractérisé en ce que les passages (11, 12) sont des fentes.

6. Oscillateur fluidique selon l'une quelconque des revendications 4 et 5 caractérisé en ce que lesdits passages (11, 12) ont une section circulaire ou rectangulaire ou carrée.

7. Oscillateur fluidique selon l'une quelconque des revendications 4 à 6 caractérisé en ce que lesdits passages (11, 12) ont une section allant en diminuant de façon à accélérer le fluide s'écoulant dans lesdits passages, puis en augmentant.

8. Oscillateur fluidique selon l'une quelconque des revendications 4 à 7 caractérisé en ce que lesdits passages (11, 12) percent ladite chambre (8) à l'endroit ou à proximité du point d'arrêt du jet.

9. Oscillateur fluidique selon l'une quelconque des revendications 4 à 8 caractérisé en ce qu'il comprend au moins deux passages de fluide supplémentaires (45, 46), percés dans ledit obstacle (16), lesdits passages supplémentaires (45, 46) étant en aval par rapport aux premiers passages (11, 12) et symétriques par rapport au plan de symétrie longitudinal (2).

10. Oscillateur fluidique selon l'une quelconque des revendications 4 à 9 caractérisé en ce qu'au moins lesdits passages principaux (11, 12) sont coudés.

11. Débitmètre comprenant un oscillateur fluidique conforme à l'une quelconque des revendications 1 à 10, le fluide oscillant entre les parois (22, 23) de la chambre (8) à une fréquence d'oscillation caractéristique du débit du fluide, et comprenant aussi des moyens (24, 25) de mesure de la fréquence d'oscillation caractérisé en ce que lesdits moyens (24, 25) de mesure de la fréquence d'oscillation comprennent des moyens de mesure des variations de la vitesse d'écoulement du fluide dans les passages (11, 12) percés dans les parois (22, 23) de la chambre (8).

12. Débitmètre selon la revendication 11 caractérisé en ce que lesdits moyens (24, 25) de mesure des variations de la vitesse d'écoulement comportent un capteur de vitesse placé dans au moins un des passages principaux (11, 12).

13. Débitmètre selon l'une quelconque des revendications 11 et 12 caractérisé en ce que les moyens de mesure de la fréquence d'oscillation du jet comportent des capteurs de pression (50, 51) placés dans lesdits passages (11, 12) ou à proximité desdits passages (11, 12).

## Patentansprüche

1. Fluidischer Oszillator mit:
einem Fluideingang (3), der einen zweidimensionalen Strahl bilden kann;
einem Hindernis (16) im Weg des Strahls, welches gegenüber dem Eingang einen Vorderabschnitt in der Form einer Kammer (8) aufweist, wobei diese Kammer (8) zwei bezüglich einer durch den Eingang (3) laufenden Längssymmetrieebene (2) symmetrische Wände (22, 23) aufweist, wobei die Wände (22, 23) in dieser Ebene (2) ineinander übergehen, dadurch gekennzeichnet, daß er Mittel (11, 12) enthält, um abwechselnd den Druck an jeder der Seitenflanken des Hindernisses (16) in der Nähe des Vorderabschnittes in Relation mit einer Oszillation des Strahls zwischen den Wänden (22, 23) der Kammer (8) zu erhöhen, wobei die Mittel zum Erhöhen des Drucks zwei symmetrische Hauptdurchgänge (11, 12) enthalten, die jeweils einen Eingang (42, 43) im Inneren der Kammer (8) und einen Ausgang (10, 13) in der Nähe einer Seitenflanke des Hindernisses (16) aufweisen.

2. Fluidischer Oszillator nach Anspruch 1, dadurch gekennzeichnet, daß die Wände (22, 23) der Kammer (8) geneigt sind, um im wesentlichen ein V zu bilden, dessen beide Schenkel sich erweiternd verlaufen.

3. Fluidischer Oszillator nach einem der Ansprüche 1 und 2, dadurch gekennzeichnet, daß er eine Umhüllung (E) aufweist, die zum einen am Fluideingang (3) und zum anderen an einem Fluidausgang (17) geöffnet ist, wobei das Hindernis in dieser Umhüllung (E) angeordnet ist und wobei diese Umhüllung Wände aufweist, welche zusammen mit den Außenwänden des Hindernisses (16) Strömungsdurchgänge (4, 5, 14, 15) des Fluids bilden.

4. Fluidischer Oszillator nach einem der Ansprüche 1 bis 3, dadurch gekennzeichnet, daß die Hauptdurchgänge (11, 12) in den Wänden (22, 23) der Kammer (8) ausgebildet und bezüglich der Längsebene (2) geneigt sind.

5. Fluidischer Oszillator nach Anspruch 4, dadurch gekennzeichnet, daß die Durchgänge (11, 12) Schlitze sind.

6. Fluidischer Oszillator nach einem der Ansprüche 4 und 5, dadurch gekennzeichnet, daß die Durchgänge (11, 12) einen kreisförmigen oder rechteckigen oder quadratischen Querschnitt aufweisen.

7. Fluidischer Oszillator nach einem der Ansprüche 4 bis 6, dadurch gekennzeichnet, daß die Durchgänge (11, 12) einen Querschnitt aufweisen, der sich verengt, um das durch diese Durchgänge strömende Fluid zu beschleunigen, und sich dann erweitert.

8. Fluidischer Oszillator nach einem der Ansprüche 4 bis 7, dadurch gekennzeichnet, daß die Durchgänge (11, 12) die Kammer (8) an der Stelle des Anhaltepunktes des Strahls oder in der Nähe von diesem durchbrechen.

9. Fluidischer Oszillator nach einem der Ansprüche 4 bis 8, dadurch gekennzeichnet, daß er wenigstens zwei zusätzliche Fluiddurchgänge (45, 46) enthält, die in dem Hindernis (16) ausgebildet sind, wobei die zusätzlichen Durchgänge (45, 46) bezüglich der ersten Durchgänge (11, 12) stromabwärts liegen und zur Längssymmetrieebene (2) symmetrisch sind.

10. Fluidischer Oszillator nach einem der Ansprüche 4 bis 9, dadurch gekennzeichnet, daß wenigstens die Hauptdurchgänge (11, 12) gekrümmt sind.

11. Durchflußmesser mit einem fluidischen Oszillator nach einem der Ansprüche 1 bis 10, wobei das Fluid zwischen den Wänden (22, 23) der Kammer (8) mit einer für den Fluiddurchfluß charakteristischen Oszillationsfrequenz oszilliert, und außerdem mit Mitteln (24, 25) zur Messung der Oszillationsfrequenz, dadurch gekennzeichnet, daß die Mittel (24, 25) zur Messung der Oszillationsfrequenz Mittel zur Messung von Änderungen der Strömungsgeschwindigkeit in den in den Wänden (22, 23) der Kammer (8) ausgebildeten Durchgängen (11, 12) aufweisen.

12. Durchflußmesser nach Anspruch 11, dadurch gekennzeichnet, daß die Mittel (24, 25) zur Messung von Änderungen der Strömungsgeschwindigkeit einen Geschwindigkeitsaufnehmer enthalten, der in wenigstens einem der Hauptdurchgänge (11, 12) angeordnet ist.

13. Durchflußmesser nach einem der Ansprüche 11 und 12, dadurch gekennzeichnet, daß die Mittel zur Messung der Oszillationsfrequenz des Strahls Druckaufnehmer (50, 51) enthalten, die in den Durchgängen (11, 12) oder in der Nähe der Durchgänge (11, 12) angeordnet sind.

## Claims

1. A fluidic oscillator comprising :
a fluid inlet (3) suitable for forming a two-dimensional fluid jet, an obstacle (16) having a front portion forming a chamber (8) which faces the inlet and is located on the path of the jet, this chamber (8) including two walls (22, 23) symmetrical about a longitudinal plane of symmetry (2) passing through said inlet (3), the walls (22, 23) meeting in this plane (2), characterized in that it comprises means (11, 12) for alternately increasing the pressure on each of the side flanks of the obstacle (16) in the vicinity of the front portion in relation to an oscillation of the jet between the walls (22, 23) of the chamber (8), said means for increasing the pressure comprising two main symmetrical passages (11, 12), each having an inlet (42, 43) being located inside the chamber (8) and an outlet (10, 13) being located in the vicinity of a side flank of the obstacle (16).

2. A fluidic oscillator according to claim 1, characterized in that the walls (22, 23) of the chamber (8) are inclined to form a V-shape whose two branches flare.

3. A fluidic oscillator according to any of the claims 1 and 2, characterized in that it comprises an enclosure (E) opening out firstly to the fluid inlet (3) and secondly to a fluid outlet (17), the obstacle being disposed within this enclosure (E), this enclosure having walls cooperating with outside walls of the obstacle (16) to form flow passages (4, 5, 14, 15) for the fluid.

4. A fluidic oscillator according to any of the claims 1 to 3, characterized in that the main passages (11, 12) are formed through the walls (22, 23) of the chamber (8) and are inclined relative to the longitudinal plane (2).

5. A fluidic oscillator according to claim 4, characterized in that the main passages (11, 12) are slots.

6. A fluidic oscillator according to any of claims 4 and 5, characterized in that said main passages (11, 12) are circular or rectangular or square in section.

7. A fluidic oscillator according to any of claims 4 to 6, characterized in that said main passages (11, 12) are tapering in section so as to accelerate said fluid flowing through said passages, followed by a flaring section.

8. A fluidic oscillator according to any of claims 4 to 7, characterized in that said main passages (11, 12) pass through said chamber at or close to the stop point of the jet.

9. A fluidic oscillator according to any of claims 4 to 8, characterized in that it comprises at least two additional fluid passages (45, 46) formed through said obstacle (16), said additional passages (45, 46) being downstream from said first passages (11, 12) and being symmetrically disposed relative to the longitudinal plane of symmetry (2).

10. A fluidic oscillator according to any of claims 4 to 9, characterized in that at least said main passages (11, 12) are bent.

11. A flowmeter comprising a fluidic oscillator in accordance with any of the claims 1 to 10, the fluid oscillating between the walls (22, 23) of the chamber (8) at an oscillation frequency that is characteristic of the flow rate of the fluid, and also comprising means (24, 25) for measuring the oscillation frequency, characterized in that said means (24, 25) for measuring the oscillation frequency include means for measuring variations in the flow speed of the fluid through the passages (11, 12) formed through the walls (22, 23) of the chamber (8).

12. A flow meter according to claim 11, characterized in that said means (24, 25) for measuring variations in the flow speed include a speed sensor placed on at least one of the main passages (11, 12).

13. A flow meter according to any of claims 11 and 12, characterized in that the means for measuring the oscillation frequency of said jet include pressure sensors (50, 51) placed in said passages or in the vicinity of said passages (11, 12).
